# EUROPÄISCHE PATENTSCHRIFT

(11) **EP 0 477 705 B1**
(45) Veröffentlichungstag und Bekanntmachung des Hinweises auf die Patenterteilung: **17.04.1996**
(21) Anmeldenummer: 91115628.9
(22) Anmeldetag: 14.09.1991
(51) Int. Cl.: F23D 14/66, F24H 1/34

(54) **Heizkessel**
Heating boiler
Chaudière de chauffage

(30) Priorität: 22.09.1990 DE 9013534 U; 03.12.1990 AT 2435/90
(43) Veröffentlichungstag der Anmeldung: 01.04.1992
(73) Patentinhaber: Joh. Vaillant GmbH u. Co., D-42810 Remscheid (DE); n.v. Vaillant s.a., B-1620 Drogenbos (BE); VAILLANT S.A.R.L, F-94537 Rungis Cedex (FR); VAILLANT Ges.m.b.H, A-1233 Wien (AT); Vaillant Ltd., Rochester Kent ME2 4EZ (GB); Vaillant B.V., NL-1105 BJ Amsterdam (NL); Vaillant GmbH, CH-8953 Dietikon 1 (CH)
(72) Erfinder: Berg, Joachim, W-5630 Remscheid (DE); Kupka, Thomas, W-4620 Castrop-Rauxel (DE)
(74) Vertreter: Heim, Johann-Ludwig, Dipl.-Ing.

(56) Entgegenhaltungen:
- DE-A- 3 842 463
- FR-A- 787 912
- FR-A- 2 411 365
- GB-A- 2 049 131

## Beschreibung

Die Erfindung bezieht sich auf einen Heizkessel gemäß dem Oberbegriff des Patentanspruchs.

Bei solchen Heizkesseln, insbesondere solchen mit Vormischgasbrennern, bei denen die Verbrennungsluft oder das Brenngas vor dem Einströmen in die Brennkammer mit im Betriebszustand erwärmten Teilen in Berührung und damit in einem Wärmeaustausch kommt - beispielsweise gemäß der FR-OS 24 11 365 oder der FR-OS 78 79 12 -, kommt es aufgrund der starken Abhängigkeit des Massenverhältnisses zwischen Gas und Luft von der Temperatur dieser beiden Komponenten zu einer Veränderung der Luftzahl zu Beginn eines jeden Betriebes. Dies führt zu Betriebsproblemen. So bewirken hohe Luftzahlen bei Kaltstarts instabile Flammen, niedrige Ionisationsströme und eine Zündunwilligkeit des Gas-Luft-Gemisches. Bei Dauerbetrieb führen andererseits zu niedrige Luftzahlen zu hohen CO- und NO_{X}-Emissionen.

Um eine Vergleichmäßigung des Gas-Luft-Verhältnisses bei allen Betriebsbedingungen zu erreichen, wurde gemäß der GB-OS 20 49 131 für einen Industrieofen vorgeschlagen, einen rekuperativen Verbrennungsluftvorwärmer und einen Folgerekuperator als Brenngasvorwärmer einzusetzen.

Aufgabe der Erfindung ist es, einen Heizkessel der eingangs erwähnten Art anzugeben, bei dem die vorgesehene Luftzahl bei allen Betriebsbedingungen, insbesondere bei Kaltstart und stabilem Dauerbetrieb, auf einfache Art und Weise eingehalten werden kann.

Erfindungsgemäß wird dies durch die kennzeichnenden Merkmale des Patentanspruchs erreicht.

Durch diese Maßnahmen ist sichergestellt, daß die Verbrennungsluft und das zur Verbrennung vorgesehene Gas im Betrieb des Brenners synchron erwärmt werden. Erfindungsgemäß werden beide zur Verbrennung vorgesehene Komponenten im wesentlichen gleich behandelt, so daß bei einem Kaltstart eine im wesentlichen gleiche Erwärmung der Verbrennungsluft und des Gases mit der Fortdauer des Betriebes erfolgt. Damit wird eine im wesentlichen gleichbleibende Luftzahl erreicht.

Die Erfindung wird nun anhand der Zeichnung näher erläutert.

Dabei zeigen:

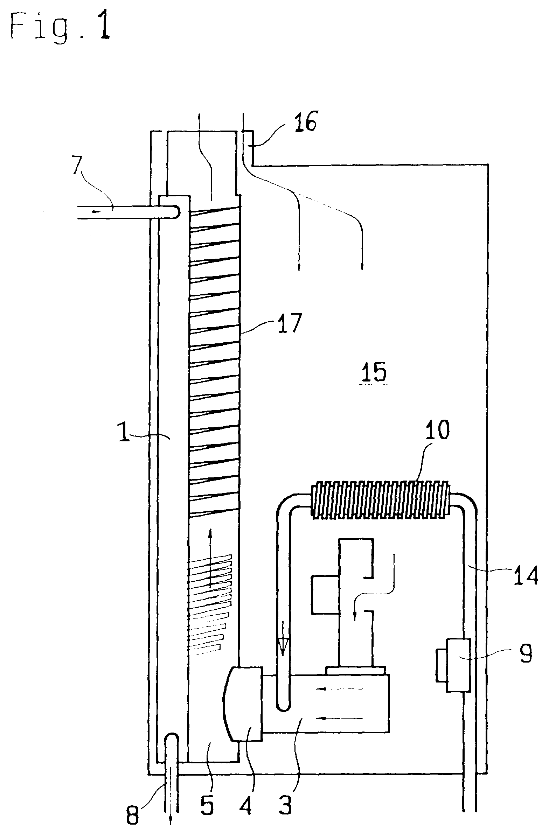

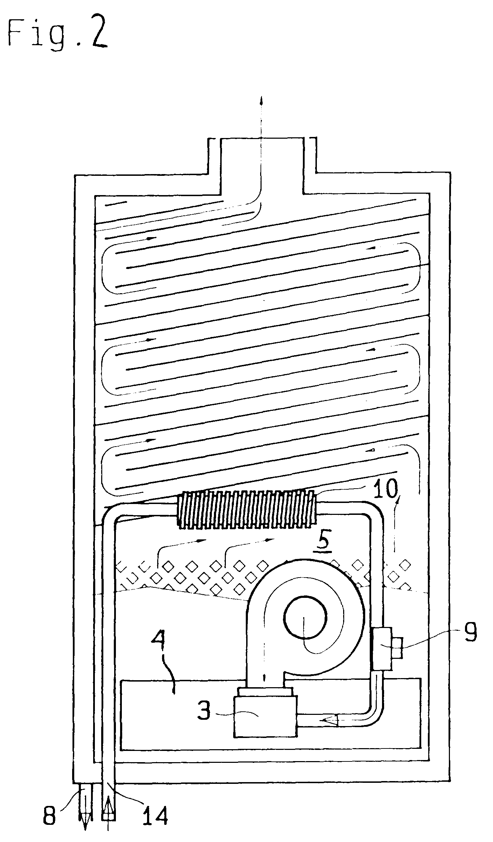

Fig. 1 und 2 schematisch zwei Ausführungsformen der Erfindung.

Bei der Ausführungsform nach der Fig. 1 ist in einer Brennkammer 5 ein Wärmetauscher 1 angeordnet, der mit einem Heizwasserrücklauf 7 und einem Heizwasservorlauf 8 verbunden ist. Einem Gasbrenner 4 ist eine Mischkammer 3 vorgeschaltet, die in einem von der Brennkammer 5 über eine wärmeleitende Wand getrennten Raum 15 angeordnet ist, in den Verbrennungsluft über eine Öffnung 16 einströmen kann. Diese wird in dem Raum 15 durch die Wärmestrahlung einer Wand 17 des Wärmetauschers 1 und durch direkten Wärmeaustausch mit der Wand 17 erwärmt.

Ein Abschnitt des Gasrohres 14 ist innerhalb des Raumes 15 geführt und als Rippenrohr 10 ausgebildet. Dadurch ist ein guter Wärmeaustausch zwischen der Verbrennungsluft im Raum 15, in dem diese über die Wand 17 erwärmt wird, und dem im Rippenrohr 10 strömenden Gas sichergestellt, so daß auch dieses erwärmt wird.

Die Ausführungsform nach der Fig. 2 unterscheidet sich von jener nach den Fig. 1 im wesentlichen dadurch, daß ein Abschnitt des berippten Gasrohres 14 unmittelbar durch die Brennkammer 5 geführt ist.

## Patentansprüche

1. Heizkessel mit einem Wärmetauscher (1) und einem in einer Brennkammer (5) angeordneten Gasbrenner (4), vorzugsweise einem Vormischgasbrenner, mit einer Leitung (16/15) zur Führung der Verbrennungsluft und einer Gasleitung (14) sowie einer Abgasleitung, wobei die Verbrennungsluftleitung (16/15) und die Gasleitung (14) zumindest abschnittsweise von im Betriebszustand des Gasbrenners (4) erwärmten Teilen, wie Brennkammer (5), Wärmetauscher (1) usw. derart begrenzt sind, daß eine im wesentlichen gleiche Erwärmung der Verbrennungsluft und des Gases erfolgt, **dadurch gekennzeichnet,** daß die Gasleitung (14) abschnittsweise als Rippenrohr (10) ausgebildet ist, das in dem von der Verbrennungsluft durchströmten und von einer Wand (17) der Brennkammer (5) begrenzten Raum (15) oder innerhalb der Brennkammer (5) angeordnet ist.

## Claims

1. A heating boiler comprising a heat exchanger (1) and a gas burner (4), preferably a premixing gas burner, which is disposed in a combustion chamber, also comprising a line (16/15) for conducting the combustion air, a gas line (14) and an exhaust gas line, wherein at least portions of the combustion air line (16/15) and of the gas line (14) are defined by parts which are heated during the operation of the gas burner (4), e.g., by the combustion chamber (5), the heat exchanger (1), etc., so that the combustion air and the gas are heated to substantially the same temperature, characterized in that a portion of the gas line (14) consists of a ribbed tube (10), which is disposed in a space (15), which is flown through by the combustion air and is defined by a wall (17) of the combustion chamber (5), or said ribbed tube (10) is disposed within the combustion chamber.

## Revendications

1. Chaudière avec un échangeur de chaleur (1) et un brûleur à gaz (4), de préférence un brûleur à mélange préalable, disposé dans une chambre de combustion (5), et avec une canalisation (16/15) pour l'air de combustion et un tuyau de gaz (14) ainsi qu'un tuyau d'évacuation des fumées, la canalisation d'air de combustion (16/15) et le tuyau de gaz (14) étant voisins au moins partiellement de parties telles que la chambre de combustion (5), l'échangeur de chaleur (1), etc. chauffées pendant la marche du brûleur à gaz (4) de sorte qu'il y a chauffage essentiellement égal de l'air de combustion et du gaz, **caractérisée par le fait** que le tuyau de gaz (14) forme partiellement un tuyau à ailettes (10) disposé dans le compartiment (15) délimité par une paroi (17) de la chambre de combustion (5) et où circule l'air de combustion, ou dans la chambre de combustion (5).
